# EUROPÄISCHE PATENTSCHRIFT

(11) **EP 0 936 042 B1**
(45) Veröffentlichungstag und Bekanntmachung des Hinweises auf die Patenterteilung: **02.07.2003**
(21) Anmeldenummer: 98106888.5
(22) Anmeldetag: 16.04.1998
(51) Int. Cl.: B29C 33/12, B29C 45/14, B29C 70/78, B29C 51/00

(54) **Formwerkzeug mit einer Schlupfspanneinrichtung zum Positionieren einer Dekormaterialschicht und Verfahren zum Herstellen von Formteilen**
Mould with a positioning device for a decorative sheet and moulding process
Moule avec dispositif de positionnement d'une couche de materiau décoratif et procédé de moulage

(30) Priorität: 23.07.1997 DE 19731561
(43) Veröffentlichungstag der Anmeldung: 18.08.1999
(73) Patentinhaber: Johnson Controls Interiors GmbH & Co. KG, 42285 Wuppertal (DE)
(72) Erfinder: Beck, Markus, 58642 Iserlohn (DE); Schmid, Gerd, 73550 Waldstetten-Wissgoldingen (DE); Kirchherr, Rudi, 74078 Heilbronn (DE); Wiederhöft, Hans-Joachim, 71665 Vaihingen-Enzweihingen (DE)
(74) Vertreter: Kutzenberger, Helga, Dr.

(56) Entgegenhaltungen:
- EP-A- 0 806 274
- WO-A-91/17035
- WO-A-96/03267
- FR-A- 2 648 746
- PATENT ABSTRACTS OF JAPAN vol. 008, no. 280 (M-347), 21. Dezember 1984 (1984-12-21) & JP 59 150741 A (SUMITOMO KAGAKU KOGYO KK), 29. August 1984 (1984-08-29) -& DATABASE WPI Week 198441 Derwent Publications Ltd., London, GB; AN 1984-252522 XP002147904

## Beschreibung

Die Erfindung betrifft ein Formwerkzeug gemäß Oberbegriff des Anspruchs 1 und ein Verfahren gemäß Oberbegriff des Anspruchs 18, wie sie in der WO 96/03267 A1 beschrieben sind.

Bei der Herstellung von Formteilen als Automobil-Ausstattungsteile wie Türverkleidungen, Säulenverkleidungen, Hutablagen, Handschuhfächer, Lenksäulenverkleidungen, Fahrzeughimmel, Sonnenblenden, Kartentaschen und dgl., insbesondere beim Hinterspritzen oder Formprägen textiler Oberwaren oder Folien mit einer Kunststoff-Formmasse treten u.a. wegen einer oftmals starken Konturierung der Formteile unerwünscht Falten auf, wenn die Dekormaterialschicht in die Formteilkontur gezogen wird. Diese Falten sind später an der Oberfläche sichtbar und führen zu einem hohen Ausschußanteil.

Durch Vorbenutzung in der Praxis ist es bekannt, die Dekormaterialschicht entweder nach der Ablage der Formmasse auf einem Formkern zu legen oder durch Dekorklammern oder Klebestellen an der Matrize zu fixieren. Dadurch wird das Dekor nicht formschlüssig positioniert, sondem nur partiell gesichert, wobei beim anschließenden Formvorgang ein völlig undefiniertes Schlupfen der Dekormaterialschicht in die Formteilkontur stattfindet. Da der Schlupf nicht exakt reproduzierbar, sondern individuell ist, muß der Zuschnitt der Dekormaterialschicht überproportional groß sein, um Ausschuß so weit wie möglich vorzubeugen. Ferner hat die Dekormaterialschicht, wenn sie lose auf die heiße Kunststoff-Formmasse gelegt wird, mit dieser bis zum Schließen des Formwerkzeugs ggfs. zu lange Kontakt, worunter das Aussehen und der Griff des Formteils leiden.

Aus EP 0 480 153 Bl ist es bekannt, in das Formwerkzeug einen Schlupfspannrahmen zu integrieren, dessen unterer Rahmenteil durch Steuereinrichtungen relativ zum Formwerkzeug beweglich und dessen oberer Rahmenteil in einer Werkzeughälfte angeordnet sind. Der Schlupfspannrahmen wird durch den Schließdruck des Formwerkzeuges geschlossen, spannt die Dekormaterialschicht randseitig ein und erlaubt ihr ein Schlupfen während des Formvorganges. Eine sichere Positionierung der Dekormaterialschicht vor dem Schließen des Formwerkzeugs ist schwierig zu erreichen. Gleichförmige und definierte Schlupfverhältnisse sind wegen der Abhängigkeit von der Formschließkraft und einer spezifisch hohen Flächenpressung im Schlupfspannrahmen schwierig zu erzielen.

Bei einem aus EP-0 333 198 A2 bekannten Formwerkzeug wird die Dekormaterialschicht lose auf die in der Form befindliche Formmasse aufgelegt, gegebenenfalls durch randseitige Sicherungsstifte positioniert, und zwischen zueinanderpassenden Klemmflächen eingeklemmt. Der Formprozeß wird bei noch nicht vollständig geschlossenem Formwerkzeug begonnen, wobei der Schließvorgang kurzzeitig unterbrochen wird und nachfolgend mit langsamer Geschwindigkeit abläuft, um die zugeführte Kunstharzschmelze kontrolliert seitlich zu verteilen und eine konzentrierte thermische Belastung der Dekormaterialschicht im Bereich der Schmelzezufuhr zu vermeiden.

Bei einem aus US-A-4 216 184 bekannten Verfahren werden die Werkzeughälften in horizontaler Richtung ineinandergefügt. Zuvor hängt die Dekormaterialschicht frei zwischen den Werkzeughälften. Eine oberhalb der Werkzeughälften angeordnete Klammer hält die Dekormaterialschicht fest, während eine unterhalb der Werkzeughälften das freie Ende der Dekormaterialschicht ergreifende weitere, nach unten belastete Klammer die Dekormaterialschicht streckt. Die Streckkraft wird beim nachfolgenden Formvorgang stufenweise verändert. Ein Schlupfen der Dekormaterialschicht in den Klammern ist ausgeschlossen.

Der Erfindung liegt die Aufgabe zugrunde, ein alternatives und optimiertes Formwerkzeug der eingangs genannten Art zu schaffen und ein entsprechendes Verfahren zum Herstellen von Formteilen in einem solchen Formwerkzeug anzugeben, mit denen mit geringer Ausschußquote qualitativ hochwertige Formteile ohne Falten herstellbar sind. Das Verfahren soll einen automatischen Ablauf und die Verwendung knapp bemessener Zuschnitte ohne unnötige Vergeudung von Dekormaterial ermöglichen, den Einlegevorgang vereinfachen und auch stark konkave Formteilformen mit Softtouch ohne Falten in den Flankenbereichen herstellen lassen.

Die gestellte Aufgabe wird erfindungsgemäß mit den Merkmalen des Anspruchs 1 und des Verfahrensanspruchs 18 gelöst.

Die Dekormaterialschicht wird bereits vor dem Schließen des Formwerkzeuges positioniert und, zweckmäßigerweise, mit einer vorbestimmten Klemmkraft mittels der Kraftspeicher festgehalten. Da die jeweils eingestellte Klemmspaltweite auf die Dicke der Dekormaterialschicht abgestimmt ist, können im Klemmspalt keine Überlappungen in den Dekormaterialschicht-Randbereichen und dadurch beim durch das endgültige Schließen des Formwerkzeuges auftretenden Schlupfen der Dekormaterialschicht auch keine Falten auftreten, die später auf der Oberfläche des Formteils sichtbar wären. Durch das voreilende Festhalten der Dekormaterialschicht läßt sich auch ein gegebenenfalls schädlicher frühzeitiger Kontakt zwischen der Dekormaterialschicht und der Formmasse vermeiden, wodurch im fertigen Formteil eine hervorragende Oberflächenqualität erzielbar ist. Die Dekormaterialschicht schlupft auf definierte Weise, wobei das Schlupfen reproduzierbar ist. Diese beiden Voraussetzungen ermöglichen eine knappe Zuschnittsgröße, mit der so wenig Dekormaterial wie möglich vergeudet wird. Die Ausschußquote wird extrem minimiert. Der Einlegevorgang der Dekormaterialschicht ist vereinfacht und läßt sich automatisch durchführen. Die Dekormaterialschicht wird während der gesamten Schließbewegung des Formwerkzeugs mittelbar durch die Kraftspeicher positioniert und verfahrensgemäß mit kontrolliertem Schlupf schlupfen gelassen, so daß sie zu keiner Zeit sich selbst überlassen bleibt. Die Kraftspeicher haben nur die Aufgabe, ein Halteelement der Schlupfspannrichtung gegen eine Werkzeughälfte, z.B. das Oberwerkzeug, zu drücken.

Gemäß Anspruch 2 läßt sich mittels der wahlweise betätigbaren Abdrückvorrichtung, beispielsweise bei stark konturierten oder konkaven Formteilgeometrien, und gegebenenfalls sogar bei einer mit einem Schaumrücken versehenen Dekormaterialschicht, gute Formteilqualität im Randbereich des Formteils erzielen, indem kurz vor der endgültigen Ausformung der Klemmspalt geöffnet und die Dekormaterialschicht zum freien Schlupfen freigegeben wird.

Gemäß Anspruch 3 wird auf baulich einfache Weise die Dekormaterialschicht während des Schließvorgangs des Formwerkzeuges nicht nur positioniert, sondern nachfolgend nur in exakt vorherbestimmbarer bzw. kontrollierter Weise schlupfen gelassen, wodurch Falten vermieden werden. Jeder Distanzhalter gibt die Klemmspaltweite und ggfs. die Klemmkraft vor, die durch die Kraftspeicher gehalten werden. Die Distanzhalter sind feste Körper und auf die Dicke der Deckmaterialschicht abgestimmt.

Gemäß Anspruch 4 überwindet das Abdrückelement die vom Kraftspeicher oder den Kraffspeichern erzeugte Kraft zu einem exakt vorherbestimmbaren Zeitpunkt, beispielsweise um das dann zur Ausbildung des Formteils im Randbereich gegebenenfalls nachteilige kontrollierte Schlupfen aufzuheben und die Dekormaterialschicht frei schlupfen zu lassen. Dies kann bei stark konturierten Formteilen oder konkaven Formteilgeometrien dann zweckmäßig sein, wenn sich die Formmasse dem Randbereich des Formteils nähert und dabei unter einer zu hohen Schlupfspannung Falten oder Dekorverzugserscheinungen auftreten könnten. Die Gefahr einer zu starken Verstreckung der Dekormaterialschicht im Randbereich gegen Ende des Formvorgangs läßt sich durch das Abdrückelement, zweckmäßigerweise kurz vor dem endgültigen Schließen des Formwerkzeugs, beseitigen. Bis dahin hat die Formmasse die Dekormaterialschicht im im Hinblick auf Falten kritischen Konkavbereich des Formteils bereits ausreichend stabilisiert, so daß in der Endphase der Formung unter der Lösewirkung des Abdrückelements keine Falten mehr auftreten. Zweckmäßig sind mehrere Abdrückelemente vorgesehen, die vorteilhaft gemeinsam wirken können.

Gemäß Anspruch 5 ist das Halteelement ein Halterahmen oder eine Halteplatte, abhängig davon wie die Werkzeughälften gestaltet sind. Mehrere Kraftspeicher gewährleisten eine gleichmäßige Klemmkraft entlang der festgeklemmten Randbereiche der Dekormaterialschicht.

Gemäß Anspruch 6 werden die Reaktionskräfte der Kraftspeicher günstig in der anderen Werkzeughälfte aufgenommen.

Gemäß Anspruch 7 läßt sich in Abhängigkeit von der Kraft der Kraftspeicher die Klemmkraft bzw. die Klemmspaltweite mittels des Distanzhalters auf die jeweilige Dekormaterialschicht abstimmen.

Gemäß Anspruch 8 wird verhindert, daß der Distanzhalter die Dekormaterialschicht festklemmt und am Schlupfen hindert.

Gemäß Anspruch 9 arbeitet die Halteplatte direkt mit der einen Werkzeughälfte zusammen, so daß das Formwerkzeug nur wenige Einzelteile aufweist.

Gemäß Anspruch 10 kann die Klemmspaltweite im Inneren des Formwerkzeugs verschieden sein von der Klemmspaltweite in den Randbereichen des Formwerkzeuges, um das Schlupfverhalten lokal unterschiedlich festzulegen und darauf abzustimmen, wo formbedingt die stärkste Gefahr einer Faltenbildung auftritt.

Gemäß Anspruch 11 sind für jeden Randbereich der Dekormaterialschlicht zwei kooperierende Halteelemente vorgesehen, deren jedes durch Kraftspeicher zum anderen hin beaufschlagt wird. Die Dekormaterialschicht wird unabängig von der Stellung der Werkzeughälften mittels der beiden Halteelemente voreilend zum Schließen des Formwerkzeuges positioniert und kann dann nur mehr kontrolliert schlupfen.

Gemäß Anspruch 12 wird durch die unterschiedliche Stärke der Kraftspeicher sichergestellt, daß zwar die vorbestimmte Klemmspaltweite für das kontrollierte Schlupfen eingehalten, die Dekormaterialschicht beim Schließen der Form jedoch so lange wie möglich ohne Kontakt mit der heißen Formmasse bleibt.

Gemäß Anspruch 13 ergibt sich eine hohe Betriebssicherheit mit Federn oder Gasdruck-Zylindern als Kraftspeicher.

Gemäß Anspruch 14 lassen sich die Abdrückkraft, der Verlauf der Abdrückbewegung und der Hub beim Abdrücken feinfühlig und exakt steuern. Hydraulikzylinder können auch relativ hohe Kräfte sehr rasch aufbauen. Jeder Hydraulikzylinder kann zwischen den beiden Halteelementen wirken oder sich beim Abdrücken nur eines Halteelementes an einer Werkzeughälfte abstützen.

Gemäß Anspruch 15 sind die Klemmspaltweite und ggfs. die Klemmkraft über die Spaltlänge gleichmäßig einstellbar.

Gemäß Anspruch 16 wird durch das Spiel bzw. den Abstand sichergestellt, daß zu keiner Zeit beim Schließen des Formwerkzeuges die durch die Kraftspeicher vorherbestimmte Klemmkraft überschritten wird.

Gemäß Anspruch 17 wird ein gegebenenfalls schädlicher Kontakt zwischen der positionierten Dekormaterialschicht und der heißen Formmasse zumindest vor der und über die anfängliche Schließbewegung der Werkzeughälften vermieden.

Mit der Verfahrensvariante gemäß Anspruch 19 wird die Gefahr der Faltenbildung insbesondere bei stark konturierter oder konkaver Formteilgeometrie dadurch eliminiert, daß zunächst die Dekormaterialschicht kontrolliert schlupft und erst in der Endphase des Formvorgangs, in der die Randbereiche des Formteils gebildet werden, die Streckung im Randbereich der dann bereits in erheblichem Ausmaß durch die Formmasse stabilisierten Dekormaterialschicht aufgehoben wird.

Gemäß Anspruch 20 wird ein gegebenenfalls schädlicher Kontakt der Dekormaterialschicht mit der Formmasse solange wie möglich hinausgeschoben, um eine gute Oberflächenqualität des Formteils (Griff bei einer Softtouch-Struktur) zu erzielen.

Anhand der Zeichnung werden Ausführungsformen des Erfindungsgegenstandes erläutert. Es zeigen:
- Fig. 1: einen schematischen Querschnitt eines noch geöffneten Formwerkzeugs bei der Herstellung eines Formteils,
- Fig. 2: das Formwerkzeug von Fig. 1 in geschlossenem Zustand,
- Fig. 3: eine andere Ausführungsform eines Formwerkzeugs mit ausgeprägter konkaver Formteilgeometrie in noch geöffnetem Zustand, schematisch und ohne Darstellung der Formteilkomponenten,
- Fig. 4: das Formwerkzeug von Fig. 3 weitgehend geschlossen und während des Formvorgangs, und
- Fig. 5: das Formwerkzeug von Fig. 3 gegen Ende des Formvorgangs.

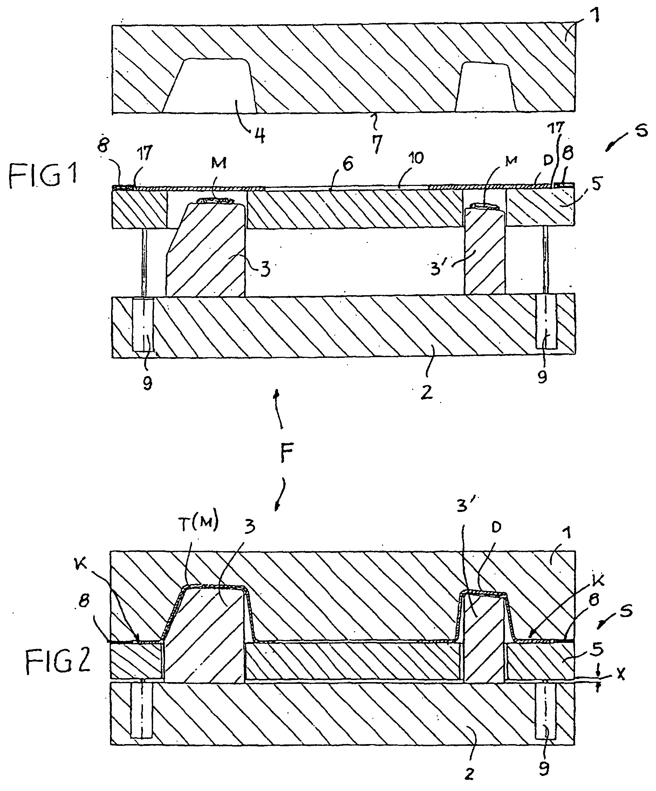

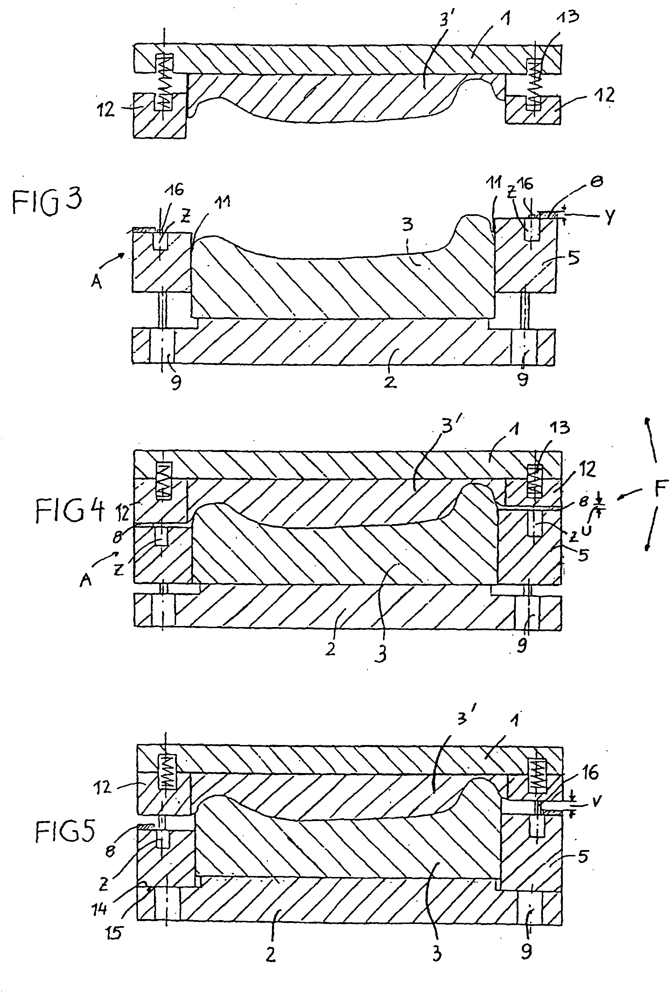

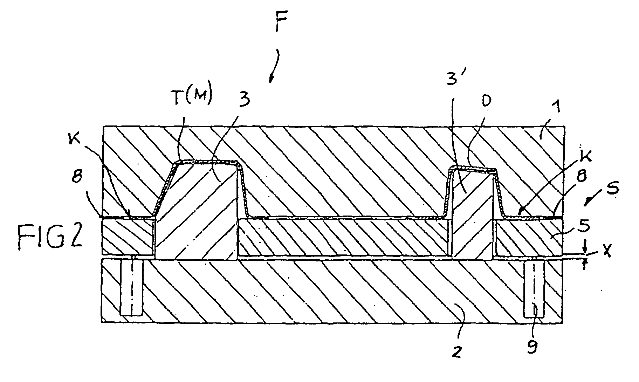

In den Fig. 1 und 2 ist ein Formwerkzeug F erkennbar, das eine obere Werkzeughälfte 1 mit Formvertiefungen 4 und einer Unterseite 7 sowie eine untere Werkzeughälfte 2 (Grundplatte) mit Kernen 3, 3' aufweist, die in die Formvertiefungen 4 passen. Zwischen den Werkzeughälften 1 und 2 ist eine Schlupfspanneinrichtung (S) mit wenigstens einem Halteelement 5, z.B. mit der Form einer Halteplatte bzw. einer Stoffhalteplatte, vorgesehen. Das Halteelement 5 besitzt eine Oberseite 6 und den Durchtritt der Kerne 3, 3' gestattende Aussparungen und ist auf Kraftspeichern 9 abgestützt, zweckmäßigerweise Gasdruckzylindern, die in der Werkzeughälfte 2 sitzen. Die Kraftspeicher 9 wirken mit vorbestimmter Hebekraft auf das Halteelement 5 ein. Es wäre denkbar, bei einer alternativen Ausführungsform die Gasspeicher 9 in der oberen Werkzeughälfte 1 abzustützen.

Am Halteelement 5, zweckmäßgerweise auf dessen Oberseite 6, sind Distanzhalter 8 (in Form von Leisten, einzelnen Blöcken oder festen Körpern) angeordnet, die zur Zusammenarbeit mit der Unterseite 7 der Werkzeughälfte 1 bestimmt und auf die Dicke der zu verarbeitenden Dekormaterialschicht D abgestimmt sind, um (Fig. 2) einen Klemmspalt K mit vorbestimmter Klemmspaltweite bzw ggfs. auch mit vorbestimmter Klemmkraft einzustellen, sobald die Werkzeughälften 1, 2 weiter einander angenähert sind als in Fig. 1, und bis die endgültige Schließstellung des Formwerkzeugs F erreicht ist.

Auf die Oberseite 6 des Halteelements 5 ist eine Dekormaterialschicht D aufgelegt, deren Ränder 17 sich zweckmäßig innerhalb der Distanzhalter 8 befinden und die in der Mitte eine Aussparung 10 aufweist. Die Dekormaterialschicht ist beispielsweise eine textile Oberware oder eine Folie. Auf die Kerne 3, 3' ist bereits eine Kunststoff-Formmasse M aufgebracht, die im späteren Formteil einen Träger T für die Dekormaterialschicht D bilden und sich mit ihr verbinden soll.

Das Halteelement 5 wird durch die Kraftspeicher 9 so hoch über den Kernen 3, 3' gehalten, daß die Dekormaterialschicht D in Fig. 1, d.h. vor dem Schließen des Formwerkzeugs F, keinen Kontakt mit der Formmasse M hat.

Beim Schließen des Formwerkzeugs F legt sich die Unterseite 7 der Werkzeughälfte 1 zunächst auf die Distanzhalter 8 auf, so daß der in Fig. 2 gezeigte Klemmspalt entsteht, in dem die äußeren Randbereiche der Dekormaterialschicht D, vorzugsweise mit vorbestimmter Klemmkraft festgehalten werden. Gegebenenfalls ist auch innerhalb der Kerne 3, 3' die gleiche Klemmwirkung für die inneren Randbereiche der Dekormaterialschicht D gegeben. Es ist jedoch denkbar, im Innenbereich eine andere Klemmspaltweite zu wählen.

Beim weiteren Absenken der oberen Werkzeughälfte 1 (bzw. Anheben der unteren Werkzeughälfte 2) kommt die Formmasse M mit der Dekormaterialschicht D in Kontakt und wird die Dekormaterialschicht D unter kontrolliertem Schlupfen im KlemmSpalt K über die in die Formvertiefungen 4 eindringenden Kerne 3, 3' gelegt, wobei sich die Formmasse M in die Gestalt des Trägers T des Formteils verformt und mit der Dekormaterialschicht D verbindet. Zumindest der äußere Randbereich der Dekormaterialschicht D schlupft in kontrollierter Weise, bis schließlich das Formwerkzeug F seine endgültige Schließstellung erreicht hat. In der endgültigen Schließstellung hält das Halteelement 5 einen Abstand X zur unteren Formwerkzeughälfte 2 (Grundplatte 1) ein, so daß nur die Kraftspeicher 9 nach wie vor das Halteelement 5 gegen die Werkzeughälfte 1 drücken. Beim kontrollierten Schlupfen kann die Dekormaterialschicht keine Falten bilden, weil während der gesamten Schließbewegung des Formwerkzeugs die Kraftspeicher 9 das kontrollierte Schlupfen überwachen und Überlappungen der Dekormaterialschicht im Klemmspalt ausschließen.

Bei konkaver Formteilgeometrie bzw. konkaven Formteilen und einer Dekormaterialschicht D mit einem Schaumrücken kann infolge des kompressiblen Schaumrückens ein weiterer zu einer Faltenbildung führender Effekt auftreten, der mit dem Formwerkzeug in den Fig. 3 bis 5 unterbindbar ist. Bei der Füllung des Formhohlraums durch Fließen der Formmasse (Schmelze) wird unter dem Schmelzedruck der Schaumrücken (nicht gezeigt) zunächst zusammengedrückt. Könnte die Dekormaterialschicht unter dieser Kompression des Schaumrückens ungehindert schlupfen, entstünde ein Überschuß der Dekormaterialschicht (Oberware) an den Flanken der konkaven Formteilflächen. Da sich beim späteren Entformen des Formteils der Schaumrücken aufgrund seiner Elastizität rückverformt, würde der Überschuß der Dekormaterialschicht an den konkaven Flanken Falten bilden. Die Entstehung dieser Falten läßt sich vermeiden, indem die Dekormaterialschicht im Klemmspalt nur in kontrollierter Weise schlupfen gelassen wird, so daß beim Eintauchen des Kerns 3' in den Kern 3 auf die Dekormaterialschicht eine Vorspannung ausgeübt und diese Vorspannung aufrechterhalten wird. Beim Entformen des Formteils und Entlasten des Schaumrückens kann sich dann die Dekormaterialschicht D entspannen, wodurch die vorerwähnte Faltenbildung vermieden wird. Infolge des kontrollierten Schlupfens der Dekormaterialschicht unter dem Einfluß der Kraftspeicher 9 wäre jedoch überhaupt kein freies Schlupfen der Dekormaterialschicht D in den Randbereichen des Formteils mehr möglich. Ein solcher weitgehend freier Schlupf ab einem bestimmten Zeitpunkt des Verfahrensablaufes wäre jedoch ausschlaggebend für eine gute Formteilqualität im Randbereich. Aus diesem Grund wird erfindungsgemäß der Klemmspalt, der über eine große Zeitperiode des Formvorganges das kontrollierte Schlupfen und Vorspannen der Dekormaterialschicht D sicherstellt, geöffnet, ehe die Formmasse bzw. Schmelze den kritischen Randbereich erreicht. Für diesen Verfahrensablauf dienen die in den Fig. 3 bis 5 gezeigten Abdrückelemente Z, die kurz vor dem endgültigen Schließen des Formwerkzeugs den Klemmspalt vergrößern oder so weit öffnen, daß die Dekormaterialschicht frei schlupfen kann.

In den Fig. 3 bis 5 ist an der oberen Werkzeughälfte 1 der durchgehend ausgebildete Kern 3' angebracht, der nahe den Außenrändern konkave Bereiche und dazwischen einen konvexen Bereich aufweist. Außerhalb des Kernes 3' sind an der Werkzeughälfte 1 Halteelemente 12 durch Kraftspeicher 13 (Druckfedern) relativ zur Werkzeughälfte 1 in Schließrichtung beweglich gehalten. Die Halteelemente 12 können gemeinsam einen Halterahmen bzw. eine Halteplatte bilden, oder getrennte leistenförmige Elemente sein, die bei geöffnetem Formwerkzeug (Fig. 3) mit ihren Unterseiten 7' bis über die Kontur des Kerns 3' vorstehen.

Die untere Werkzeughälfte 2 trägt den Kern 3, der konvexe Randbereiche und dazwischen einen konkaven Abschnitt aufweist und außenseitig in Tauchrändern 11 endet. Außerhalb des Kerns 3 sind, auf die Halteelemente 12 ausgerichtet, Halteelemente 5 vorgesehen, die entweder gemeinsam einen Halterahmen oder eine Halteplatte bilden, oder individuelle Leisten sind. Die Halteelemente 5 sind durch Kraftspeicher 9 (Gasdruckzylinder) abgestützt, die in der Werkzeughälfte 2 sitzen und die Halteelemente 5 in Fig. 3 nach oben beaufschlagen, derart, daß die Oberseiten 6 der Halteelemente 5 annährend mit der Kontur des Kerns 3 fluchten oder sogar oberhalb derselben liegen. An den oberen und/oder unteren Halteelementen 5, 12 sind die Distanzhalter 8 in Form von Leisten oder Blöcken angeordnet, zweckmäßigerweise mit einer Höhe Y. Ferner sind in den Halteelementen 5 und/oder Abdrückvorrichtungen A vorgesehen, beispielsweise in Form von Hydraulikzylindern Z mit ausfahrbaren Abdrückstößeln 16. Die Hydraulikzylinder Z können so angeordnet sein, daß sich die Abdrückstößel 16 knapp innerhalb der Distanzhalter 8 befinden. Es ist denkbar, die Abdrückstößel 16 alternativ durch die Distanzhalter 8 hindurch zu führen.

Beim Annähern der Werkzeughälften 1, 2 wird zwischen den Unterseiten 7, und den Oberseiten 6 der Halteelemente 12, 5 der Klemmspalt K gebildet, dessen Klemmspaltweite u durch die Distanzhalter 8 festgelegt ist, und zwar im Hinblick auf einen kontrollierten Schlupf der eingeklemmten Randbereiche der Dekormaterialschicht (nicht gezeigt). Dabei wird die Dekormaterialschicht positioniert, so daß sie mit der im Kern 3 abgelegten Formmasse (nicht gezeigt) zunächst noch nicht in Kontakt kommt.

Beim weiteren Fügen der Kerne 3, 3' werden die Randbereiche der Dekormaterialschicht um Klemmspalt K und über die Tauchkanten 11 mit kontrolliertem Schlupf schlupfen gelassen, wobei die Dekormaterialschicht im Formhohlraum unter Vorspannung bleibt. Die Werkzeughälften 1, 2 werden so weit gefügt, daß die Halteelemente 5 zur Werkzeughälfte 2 einen Abstand X einhalten und nur die Kraftspeicher 9 den Klemmspalt K bestimmen. Gegen Ende des Formvorgangs, gegebenenfalls kurz vor dem vollständigen Schließen des Formwerkzeugs F, und sobald sich die verdrängte Formmasse im Formhohlraum den Tauchkanten 11 nähert und die Randbereiche des Formteils auszubilden beginnt, werden die bis dahin eingefahrenen Abdrückstößel 16 ausgefahren (Fig. 5), um den Klemmspalt K auf ein Maß V zu öffnen und es so der Dekormaterialschicht zu gestatten, dann frei zu schlupfen. Beispielsweise werden die Halteelemente 5 gemäß Fig. 3 so weit nach unten verlagert, bis ihre Unterseiten 14 auf Gegenflächen 15 der Werkzeughälfte 2 aufsitzen. Die Kraftspeicher 13 der Halteelemente 12 sind schwächer als die Kraftspeicher 9, so daß zuvor bereits die Halteelemente 12 definierte Endlagen an der Werkzeughälfte 1 erreicht haben.

Nach Abschluß des Formvorgangs wird das Formwerkzeug F wieder geöffnet, wobei die einzelnen Komponenten in die in Fig. 3 gezeigten Positionen zurückkehren und ggfs.die Halteelemente 12 und/oder 5 das fertigen Formteil ausheben.

## Patentansprüche

1. Formwerkzeug zum Herstellen von Formteilen durch Hinterspritzen oder Prägeformen aus wenigstens einer Dekormaterialschicht (D) und einer Kunststoff-Formmasse (M), mit wenigstens zwei unter Begrenzung eines Formhohlraums für die Dekormaterialschicht (D) und die Formmasse (M) zusammenfügbaren Werkzeughälften (1, 2, 3, 3'), und mit einer außerhalb des Formhohlraums am Formwerkzeug (F) angeordneten Schlupf-Spanneinrichtung (S), mittels derer ein Spalt zum Positionieren der Dekormaterialschicht (D) gebildet ist,
**dadurch gekennzeichnet, daß** der Spalt ein Klemmspalt (K) ist, der sich während des Zusammenfügens der Werkzeughälften (1, 2, 3, 3') bildet, wobei seine Spaltweite (u) durch Kraftspeicher (9) voreilend zum vollständigen Schließen des Formwerkzeugs (F) bis auf eine vorbestimmte Spaltweite (u) verkleinerbar ist.

2. Formwerkzeug nach Anspruch 1, **dadurch gekennzeichnet, daß** die Schlupfspanneinrichtung (S) eine wahlweise betätigbare Abdrückvorrichtung (A) zum Vergrößern des mittels der Kraftspeicher (9) eingestellten Klemmspalts (K) bei noch geschlossenem Formwerkzeug (F) aufweist.

3. Formwerkzeug nach Anspruch 1, **dadurch gekennzeichnet, daß** die Schlupfspanneinrichtung (S) an zumindest einer Seite des Formwerkzeugs (F) angrenzend an den Formhohlraum an einer der Werkzeughälften (1, 2) wenigstens ein Halteelement (5) aufweist, das annähernd parallel zur Schließbewegung der Werkzeughälfte (1, 2) und relativ zu diesem beweglich und bei der Schließbewegung durch wenigstens einen Kraftspeicher in Richtung zu der einen Werkzeughälfte (1) beaufschlagbar ist, die sich auf der der Formmasse (M) abgewandten Seite der Dekormaterialschicht (D) befindet, und daß zwischen dem Halteelement (5) und der einen Werkzeughälfte (1) wenigstens ein Distanzhalter (8) zum Begrenzen einer vorbestimmten Klemmkraft für die Dekormaterialschicht bzw. der Klemmspaltweite (u) vorgesehen ist.

4. Formwerkzeug nach Anspruch 3, **dadurch gekennzeichnet, daß** wirkungsmäßig zwischen dem Halteelement (5) und der einen Werkzeughälfte (1) wenigstens ein wahlweise betätigbares Abdrückelement (Z) eingeordnet ist, das stärker ist als die Kraftspeicher (9).

5. Formwerkzeug nach Anspruch 3, **dadurch gekennzeichnet, daß** das Halteelement (5) ein einen Formkern (3, 3') umfassender Halterahmen oder eine im Bereich von Formkernen (3, 3') ausgesparte Halteplatte ist, der bzw. die von mehreren Kraftspeichern (9) beaufschlagt wird.

6. Formwerkzeug nach Anspruch 4, **dadurch gekennzeichnet, daß** jeder Kraftspeicher (9) an der anderen Werkzeughälfte (2) abgestützt ist.

7. Formwerkzeug nach Anspruch 3, **dadurch gekennzeichnet, daß** der Distanzhalter (8) zur Änderung der Klemmspaltweite (u) verstellbar oder austauschbar ist.

8. Formwerkzeug nach wenigstens einem der Ansprüche 1 bis 7, **dadurch gekennzeichnet, daß** der Distanzhalter (8) im Klemmspalt (K) von der Dekormaterialschicht (D) ausgespart ist.

9. Formwerkzeug nach Anspruch 5, **dadurch gekennzeichnet, daß** die Halteplatte (5) den Klemmspalt (K) mit der einen Formhälfte (1) begrenzt.

10. Formwerkzeug nach Anspruch 5, **dadurch gekennzeichnet, daß** die Klemmspaltweite (u) innerhalb von Kemaussparungen der Halteplatte verschieden von der Klemmspaltweite (u) außerhalb der Kernaussparungen ist.

11. Formwerkzeug nach wenigstens einem der Ansprüche 1 bis 5, **dadurch gekennzeichnet, daß** die Schlupfspanneinrichtung (S) an beiden Werkzeughälften (2) aufeinander ausgerichtete Halteelemente (5, 12) aufweist, die gemeinsam den Klemmspalt (K) begrenzen und an ihren Werkzeughälften (1, 2) jeweils durch Kraftspeicher (9, 13) von der zugeordneten Werkzeughälfte weg beaufschlagt sind.

12. Formwerkzeug nach Anspruch 11, **dadurch gekennzeichnet, daß** die Kraftspeicher (13) des einen Halteelements (12), vorzugsweise des oberen Haltelelements, schwächer sind als die Kraftspeicher (9) des anderen Halteelements (5).

13. Formwerkzeug nach wenigstens einem der Ansprüche 1 bis 12, **dadurch gekennzeichnet, daß** jeder Kraftspeicher (9, 13) eine Feder oder ein Gasdruckzylinder ist.

14. Formwerkzeug nach Anspruch 4, **dadurch gekennzeichnet, daß** das Abdrükkelement (Z) ein im Halteelement (5, 12) oder in der Werkzeughälfte (1, 2) gelagerter Hydraulikzylinder mit einem aus- und einfahrbaren Abdrück-Kolbenstößel (16) ist.

15. Formwerkzeug nach Anspruch 3, **dadurch gekennzeichnet, daß** der Distanz-halter (8) leistenförmig ausgebildet und außerhalb eines Randes (17) der als Zuschnitt ausgebildeten Dekormaterialschicht (D) angeordnet ist.

16. Formwerkzeug nach wenigstens einem der Ansprüche 1 bis 13, **dadurch gekennzeichnet, daß** bei geschlossenem Formwerkzeug (F) das Halteelement (5) dem Distanzhalter (8) abgewandt der Werkzeughälfte (2) mit einem Spiel (x) gegenüberliegt.

17. Formwerkzeug nach wenigstens einem der Ansprüche 1 bis 14, **dadurch gekennzeichnet, daß** bei geöffnetem Formwerkzeug und annähernd entspannten Kraftspeichern (9) eine den späteren Klemmspalt (K) begrenzende Dekormaterialschicht-Auflagefläche (6) des Halteelements (5) in Richtung zur anderen Werkzeughälfte (2) und in Schließrichtung vor der Formkontur angeordnet ist.

18. Verfahren zum Herstellen von Formteilen aus wenigstens einer Dekormaterialschicht (D) und einer Kunststoff-Formmasse (M) in einem Hinterspritz- oder Prägeformvorgang in einem Formhohlraum, bei dem zwei Werkzeughälften (1, 2, 3, 3') eines Formwerkzeugs (F) zusammengefügt werden, wobei die Dekormaterialschicht (D) während des Hinterspritz- oder Prägeformvorganges außerhalb des Formhohlraums von einer Schlupf-Spann-einrichtung (S) in einem Spalt gehalten wird und sich unter dem Druck der Formmasse (M) mit kontrolliertem Schlupf bewegt,
**dadurch gekennzeichnet, daß** die Dekormaterialschicht (D) klemmend in dem Spalt befestigt wird, wobei der Klemmspalt (K) während des Zusammenfügens der Werkzeughälften (1, 2, 3, 3') voreilend zum vollständigen Schließen des Formwerkzeugs gebildet und auf eine vorbestimmte Spaltweite (u) und Klemmkraft eingestellt wird.

19. Verfahren nach Anspruch 18,
**dadurch gekennzeichnet, daß** vor der Bildung des Klemmspalts (K) bei geöffnetem Formwerkzeug (F) sowohl die Formmasse (M) in das Formwerkzeug eingebracht als auch die Dekormaterialschicht (D) auf einer Dekormaterialschicht-Auflagefläche (6) der Schlupf-Spanneinrichtung (S) positioniert wird.

20. Verfahren nach Anspruch 18 oder 19,
**dadurch gekennzeichnet, daß** die Dekormaterialschicht (D) beabstandet von der Formmasse (M) in der Schlupf-Spanneinrichtung (S) positioniert wird.

21. Verfahren nach einem der Ansprüche 18 oder 20,
**dadurch gekennzeichnet, daß** die Dekormaterialschicht (D) im wesentlichen gestreckt positioniert wird, wobei beim Zusammenfügen der Werkzeughälften (1, 2, 3; 3') auf die Dekormaterialschicht (D) eine Vorspannung ausgeübt wird.

22. Verfahren nach einem der Ansprüche 18 bis 21,
**dadurch gekennzeichnet, daß** die Dekormaterialschicht (D) nur bis kurz vor Beendigung des Hinterspritz- oder Prägeformvorgangs mit kontrolliertem Schlupf im Klemmspalt schlupfen gelassen wird, und daß der Klemmspalt vor Beendigung des Hinterspritz- oder Prägeformvorgangs, vorzugsweise ehe die Formmasse (M) einen Tauchkantenbereich (11) des Pormhohlraums erreicht, geöffnet und die Dekormaterialschicht (D) im Klemmspalt (K) zum freien Schlupfen freigegeben wird.

## Claims

1. Mould for producing moulded parts by film-insert moulding or embossing from at least one layer of decorative material (D) and a plastics moulding compound (M), with at least two mould halves (1, 2, 3, 3'), which can be joined together to delimit a mould cavity for the layer of decorative material (D) and the moulding compound (M), and with a slip clamping device (S), which is arranged outside the mould cavity on the mould (F) and by means of which a gap for positioning the layer of decorative material (D) is formed, **characterized in that** the gap is a clamping gap (K) which is formed during the joining together of the mould halves (1, 2, 3, 3'), its gap width (u) being reducible by means of energy stores (9) to a predetermined gap width (u) ahead of complete closing of the mould (F).

2. Mould according to Claim 1, **characterized in that** the slip clamping device (S) has an optionally actuable pushing-away device (A) for increasing the clamping gap (K) set by means of the energy stores (9) with the mould (F) still closed.

3. Mould according to Claim 1, **characterized in that** the slip clamping device (S) has on at least one side of the mould (F) adjacent to the mould cavity on one of the mould halves (1, 2) at least one holding element (5), which is movable approximately parallel to the closing movement of the mould half (1, 2) and in relation to the latter and can, during the closing movement, be forcibly acted on by at least one energy store in the direction of the one mould half (1) which is located on the side of the layer of decorative material (D) facing away from the moulding compound (M), and **in that** at least one spacer (8) is provided between the holding element (5) and the one mould half (1) for limiting a predetermined clamping force for the layer of decorative material or the clamping gap width (u).

4. Mould according to Claim 3, **characterized in that** at least one optionally actuable pushing-away element (Z), which is stronger than the energy stores (9), is effectively arranged between the holding element (5) and the one mould half (1).

5. Mould according to Claim 3, **characterized in that** the holding element (5) is a holding frame, which encloses a mould core (3, 3'), or a holding plate, which is cut out in the region of mould cores (3, 3'), which frame or plate is acted on by a number of energy stores (9).

6. Mould according to Claim 4, **characterized in that** each energy store (9) is supported on the other mould half (2).

7. Mould according to Claim 3, **characterized in that** the spacer (8) is adjustable or exchangeable to change the clamping gap width (u).

8. Mould according to at least one of Claims 1 to 7, **characterized in that** the spacer (8) is cut out from the layer of decorative material (D) in the clamping gap (K).

9. Mould according to Claim 5, **characterized in that** the holding plate (5) delimits the clamping gap (K) with the one mould half (1).

10. Mould according to Claim 5, **characterized in that** the clamping gap width (u) within the core cutouts of the holding plate is different from the clamping gap width (u) outside the core cutouts.

11. Mould according to at least one of Claims 1 to 5, **characterized in that** the slip clamping device (S) has on both mould halves (2) holding elements (5, 12) which are aligned with each other, together delimit the clamping gap (K) and at their mould halves (1, 2) are respectively forced away from the assigned mould half by energy stores (9, 13).

12. Mould according to Claim 11, **characterized in that** the energy stores (13) of the one holding element (12), preferably of the upper holding element, are weaker than the energy stores (9) of the other holding element (5).

13. Mould according to at least one of Claims 1 to 12, **characterized in that** each energy store (9, 13) is a spring or a pressurized gas cylinder.

14. Mould according to Claim 4, **characterized in that** the pushing-away element (Z) is a hydraulic cylinder which is mounted in the holding element (5, 12) or in the mould half (1, 2) and has an extendable and retractable pushing-away plunger ram (16).

15. Mould according to Claim 3, **characterized in that** the spacer (8) takes the form of a strip and is arranged outside an edge (17) of the layer of decorative material (D) formed as a blank.

16. Mould according to at least one of Claims 1 to 13, **characterized in that**, with the mould (F) closed, the holding element (5) lies opposite the spacer (8), facing away from the mould half (2), with a clearance (x).

17. Mould according to at least one of Claims 1 to 14, **characterized in that**, with the mould open and the energy stores (9) almost relaxed, a supporting surface (6) of the holding element (5) for the layer of decorative material, delimiting the later clamping gap (K), is arranged in front of the mould contour in the direction of the other mould half (2) and in the closing direction.

18. Process for producing moulded parts from at least one layer of decorative material (D) and a plastics moulding compound (M) in a film-insert moulding or embossing operation in a mould cavity, in which two mould halves (1, 2, 3, 3') of a mould (F) are joined together, the layer of decorative material (D) being held in a gap outside the mould cavity by a slip clamping device (S), and moving with a controlled slip under the pressure of the moulding compound (M) during the film-insert moulding or embossing operation, **characterized in that** the layer of decorative material (D) is fastened in the gap in a clamping manner, the clamping gap (K) being formed during the joining together of the mould halves (1, 2, 3, 3') ahead of the complete closing of the mould and being set to a predetermined gap width (u) and clamping force.

19. Process according to Claim 18, **characterized in that**, before the forming of the clamping gap (K) with the mould (F) open, not only is the moulding compound (M) introduced into the mould but also the layer of decorative material (D) is positioned on a supporting surface (6) for the layer of decorative material of the slip clamping device (S).

20. Process according to Claim 18 or 19, **characterized in that** the layer of decorative material (D) is positioned in the slip clamping device (S) at a distance away from the moulding compound (M).

21. Process according to either of Claims 18 and 20, **characterized in that** the layer of decorative material (D) is positioned in a substantially stretched state, a pretension being exerted on the layer of decorative material (D) during the joining together of the mould halves (1, 2, 3, 3').

22. Process according to one of Claims 18 to 21, **characterized in that** the layer of decorative material (D) is allowed to slip with a controlled slip in the clamping gap only until shortly before completion of the film-insert moulding or embossing operation, and **in that** the clamping gap is opened, and the layer of decorative material (D) in the clamping gap (K) is released for free slipping, before completion of the film-insert moulding or embossing operation, preferably before the moulding compound (M) reaches a vertical flash face region (11) of the mould cavity.

## Revendications

1. Outil de formage pour fabriquer des pièces moulées par contre-injection ou par matriçage à partir d'au moins une couche de matière décorative (D) et une matière plastique de moulage (M), comportant au moins deux moitiés d'outil (1, 2, 3, 3') pouvant être assemblées en délimitant un espace creux de formage destiné à la couche de matière décorative (D) et à la matière de moulage (M), et un dispositif de serrage à glissement (S), agencé à l'extérieur de l'espace creux de formage au niveau de l'outil de formage (F), permettant de ménager une fente en vue de positionner la couche .de matière de décorative (D),
**caractérisé en ce que** la fente est une fente de serrage (K) qui se forme lors de l'assemblage des moitiés d'outil (1, 2, 3, 3'), et dont la largeur (u) peut être réduite précipitamment au moyen d'un accumulateur d'énergie (9) en vue de fermer complètement l'outil de formage (F) jusqu'à atteindre une largeur de fente (u) prédéterminée.

2. Outil de formage selon la revendication 1, **caractérisé en ce que** le dispositif de serrage à glissement (S) comporte un dispositif de compression (A) actionnable sélectivement en vue d'augmenter la fente de serrage (K) réglée au moyen de l'accumulateur d'énergie lorsque l'outil de formage (F) est fermé.

3. Outil de formage selon la revendication 1, **caractérisé en ce que** le dispositif de serrage à glissement (S) comporte, sur au moins un côté de l'outil de formage (F), adjacent à l'espace creux de formage, au niveau de l'une des moitiés d'outil (1, 2), au moins un élément de retenue (5) qui est mobile à peu près parallèlement au mouvement de fermeture des moitiés d'outil (1, 2) et par rapport à ceux-ci, et qui peut être sollicité lors du mouvement de fermeture par au moins un accumulateur d'énergie dans la direction de l'une (1) des moitiés d'outil qui se trouve du côté de la couche de matière décorative (D) qui est opposée à la matière de moulage (M), et **en ce qu'**il est prévu, entre l'élément de retenue (5) et l'une (1) des moitiés d'outil, au moins un élément d'espacement (8) en vue de limiter une force de serrage prédéterminée pour la couche de matière décorative ou la largeur (u) de la fente de serrage.

4. Outil de formage selon la revendication 3, **caractérisé en ce qu'**au moins un élément de compression (Z) actionnable sélectivement, qui est plus puissant que les accumulateurs d'énergie (9), est inséré fonctionnellement entre l'élément de retenue (5) et l'une (1) des moitiés d'outil.

5. Outil de formage selon la revendication 3, **caractérisé en ce que** l'élément de retenue (5) est un châssis de retenue comportant un noyau de formage (3, 3') ou une plaque de retenue, évidée au niveau de noyaux de formage (3, 3'), qui est sollicité par plusieurs accumulateurs d'énergie (9).

6. Outil de formage selon le revendication 4, **caractérisé en ce que** chaque accumulateur d'énergie (9) est supporté au niveau de l'autre moitié d'outil (2).

7. Outil de formage selon la revendication 3, **caractérisé en ce que** l'élément d'espacement (8) est réglable ou remplaçable en vue de modifier la largeur (u) de la fente de serrage.

8. Outil de formage selon au moins l'une des revendications 1 à 7, **caractérisé en ce que** l'élément d'espacement (8), dans la fente de serrage (K), est dépourvu de couche de matière décorative (D).

9. Outil de formage selon le revendication 5, **caractérisé en ce que** la plaque de retenue (5) délimite la fente de serrage (K) avec l'une des moitiés de moule (1).

10. Outil de formage selon le revendication 5,**caractérisé en ce que** la largeur (u) de la fente de serrage, à l'intérieur des évidements pour noyau de la plaque de retenue, est différente de la largeur (u) de la fente de serrage à l'extérieur des évidements pour noyau.

11. Outil de formage selon au moins l'une des revendications 1 à 5, **caractérisé en ce que** le dispositif de serrage à glissement (S) comporte au niveau des deux moitiés d'outil (2) des éléments de retenue (5, 12), dirigés l'un vers l'autre, qui délimitent conjointement la fente de serrage (K), et qui sont sollicités au niveau de leurs moitiés d'outil (1, 2) respectivement par des accumulateurs d'énergie (9, 13) directement à partir de la moitié d'outil associée.

12. Outil de formage selon la revendication 11, **caractérisé en ce que** les accumulateurs d'énergie (13) de l'un des éléments de retenue (12), de préférence l'élément de retenue supérieur, sont moins puissants que les accumulateurs d'énergie (9) de l'autre élément de retenue (5).

13. Outil de formage selon au moins l'une des revendications 1 à 12, **caractérisé en ce que** chaque accumulateur d'énergie (9, 13) est un ressort ou un cylindre à gaz comprimé.

14. Outil de formage selon la revendication 4, **caractérisé en ce que** l'élément de compression (Z) est un cylindre hydraulique, monté dans l'élément de retenue (5, 12) ou dans les moitiés d'outil (1, 2), comportant un piston de compression (16) apte à entrer et sortir.

15. Outil de formage selon la revendication 3, **caractérisé en ce que** l'élément d'espacement (8) est conformé en barre, et est agencé à l'extérieur d'un bord (17) de la couche de matière décorative (D) conformée en pièce découpée.

16. Outil de formage selon au moins l'une dès revendications 1 à 13, **caractérisé en ce que** l'élément de retenue (5) se trouve en face de l'élément d'écartement (8) opposé à la moitié d'outil (2) avec un jeu (x) lorsque l'outil de formage (F) est fermé.

17. Outil de formage selon au moins l'une des revendications 1 à 14, **caractérisé en ce qu'**une surface d'appui (6), destinée à la couche de matière décorative, de l'élément de retenue (5), laquelle surface d'appui délimite la fente de serrage ultérieure (K), est prévue devant le contour de moulage dans la direction de l'autre moitié d'outil (2) et dans la direction de fermeture lorsque l'outil de formage est ouvert et que les accumulateurs d'énergie (9) sont à peu près desserrés.

18. Procédé de fabrication de pièces moulées à partir d'au moins une couche de matière décorative (D) et une matière plastique de moulage (M) dans un processus de contre-injection ou de matriçage dans un espace creux de formage dans lequel deux moitiés d'outil (1, 2, 3, 3') d'un outil de formage (F) sont assemblées, la couche de matière décorative (D) étant maintenue lors du processus de contre-injection ou de matriçage à l'extérieur de l'espace creux de formage par un dispositif de serrage à glissement (S), et se déplaçant avec un glissement commandé sous l'action de la pression exercée par la matière de formage (M),
**caractérisé en ce que** la couche de matière décorative (D) est fixée par serrage dans la fente, la fente de serrage (K) étant formée lors de l'assemblage des moitiés d'outil (1, 2, 3, 3') précipitamment en vue de fermer complètement l'outil de formage et étant réglée à une largeur de fente (u) et une force de serrage prédéterminées.

19. Procédé selon la revendication 18, **caractérisé en ce que** l'on introduit la matière de formage (M) dans l'outil de formage et l'on positionne la couche de matière décorative (D) sur une surface d'appui (6), destinée à la couche de matière décorative, de l'outil de serrage à glissement (S) avant la formation de la fente de serrage (K) et lorsque l'outil de formage (F) est ouvert.

20. Procédé selon la revendication 18 ou 19, **caractérisé en ce que** la couche de matière décorative (D) est positionnée à distance de la matière de formage (M) dans le dispositif de serrage à glissement (S).

21. Procédé selon l'une des revendications 18 ou 20, **caractérisé en ce que** la couche de matière décorative (D) est positionnée de façon sensiblement étalée, une précontrainte étant exercée sur la couche de matière décorative (D) lors de l'assemblage des moitiés d'outil (1, 2, 3, 3').

22. Procédé selon l'une des revendications 18 à 21, **caractérisé en ce que** l'on ne fait glisser la couche de matière décorative (D) dans la fente de serrage que jusqu'à peu avant la fin du processus de contre-injection ou de matriçage, et **en ce que** la fente de serrage est ouverte avant la fin du processus de contre-injection ou de matriçage, de préférence avant que la matière de moulage (M) n'atteigne une zone de bord d'immersion (11) de l'espace creux de formage, et la couche de matière décorative (D) dans la fente de serrage (K) est libérée afin de glisser librement.
